# EUROPÄISCHE PATENTSCHRIFT

(11) **EP 2 483 219 B1**
(45) Veröffentlichungstag und Bekanntmachung des Hinweises auf die Patenterteilung: **19.11.2014**
(21) Anmeldenummer: 10784243.7
(22) Anmeldetag: 30.09.2010
(51) Int. Cl.: C03C 12/00, C03C 17/42, C04B 20/12, C04B 111/20, C04B 111/60

(54) **BESCHICHTETES GLASGRANULAT ALS BETONZUSCHLAG**
COATED GLASS GRANULATE AS CONCRETE AGGREGATE
GRANULAT DE VERRE À REVÊTEMENT TRIVALENT COMME AGRÉGAT POUR BÉTON

(30) Priorität: 01.10.2009 DE 202009013082 U
(43) Veröffentlichungstag der Anmeldung: 08.08.2012
(73) Patentinhaber: Schultze-Kraft, Andreas, 64342 Seeheim-Jugenheim (DE)
(72) Erfinder: Schultze-Kraft, Andreas, 64342 Seeheim-Jugenheim (DE)
(86) Internationale Anmeldenummer: PCT/DE2010/001150
(87) Internationale Veröffentlichungsnummer: WO 2011/038722

(56) Entgegenhaltungen:
- EP-A2- 1 624 031
- EP-A2- 1 666 430
- WO-A1-01/07528
- WO-A1-2004/014815
- WO-A2-02/076900
- DE-A1- 4 334 623
- DE-A1- 4 402 432
- US-A- 4 888 240
- US-A- 5 182 173
- US-A- 5 422 183

## Beschreibung

### Gegenstand:

Das Schutzbegehren betrifft einen Beschichtungsaufbau für nicht alkaliresistente Glasgranulate, der es technisch möglich macht, diese Glasgranulate als dekorativen Zuschlag für zementös bzw. hydraulisch gebundene Produkte wie z.B. beschliffenen und polierten Ortterrazzo oder beschliffene und polierte oder beschliffene und oberflächenstrukturierte - z.B. kugelgestrahlte - Platten oder sonstige Formteile aus Betonwerkstein nutzbar zu machen.

### Hintergrund:

Zementös gebundene Ortterrazzo-Fussböden und industriell gefertigte Betonwerksteine werden in ihrer traditionellen Ausführung mit Zuschlägen aus Naturstein, im gröberen Körnungsbereich vorzugsweise mit "Edelsplitt" aus farblich aufeinander abgestimmten Natursteinsorten gefüllt.

Wegen ihres günstigen Preis-Leistungs-Verhältnisses haben sich Produkte aus Betonwerkstein seit vielen Jahren einen bedeutenden Stellenwert auf dem Baustoffmarkt bewahrt. Die Nachfrage nach zementgebundenen Terrazzo-Fussböden ist in letzter Zeit sogar erheblich gestiegen - nicht zuletzt, weil kunststoffmodifzierte Betonrezepturen es aufgrund verbesserter Elastizität ermöglichen, solche Bodenbeläge über sehr grosse Flächen fugenlos - und ohne Gefahr der Rissbildung - zu verlegen.

Der Erfolg moderner Betonwerkstein- und Terrazzo-Technik basiert aber auch auf dem Bemühen der Hersteller, die Produkte optisch immer attraktiver zu gestalten. So wurden auch immer wieder Versuche unternommen, die Produkte durch Einbeziehung von farbigem oder farbig beschichtetem Glasgranulat optisch zu bereichern. Aus Kostengründen kommt hierfür in erster Linie Recycling-Glasgranulat in Frage.

### Stand der Technik:

DE 43 34 623 schlägt vor, Glas als Zuschlagstoff für die Betonherstellung und den Straßenbau zu verwenden, nachdem es zuvor gebrochen und die Glasoberfläche mechanisch oder chemisch aufgerauht und/oder mit Haftvermittlern versehen wurde.

Das offenbarte Verfahren zielt nicht auf farbig beschichtete Glasgranulate und deren Verwendung für terrazzoartige, beschliffene Werksteine. Es berücksichtigt nicht die (zum Zeitpunkt der Anmeldung allerdings auch noch kaum bekannte) Alkali-Kieselsäure-Reaktion.

WO 2004/014815 A1 offenbart ein lösemittelfreies Verfahren zur hydrophoben Farbbeschichtung von Glasgranulat und das Produkt hieraus. Dieses Produkt wurde jedoch gezielt für eine Einbindung in eine polymere, d.h. nicht hochgradig alkalische Matrix konzipiert.

Die Versuche, dieses Produkt auch als Zuschlag in Verbindung mit Portland-Zement als Werkstein-Bindemittel einzusetzen, haben gezeigt, dass eine ausreichende Sperrwirkung gegen alkalischen Einwirkung nur erzielt wird, wenn die Beschichtung rund um das Glaskorn eine Dicke von mindestens 150 µm, unabhängig von der Größe des Glaskorns, aufweist.

Aber auch wenn diese Voraussetzung erfüllt war, zeigte sich ein anderer Nachteil: Die Kunstharzumhüllung der Glaskörner ging keine kohäsive Bindung mit der umgebenden Zementmatrix ein. Je mehr von diesen beschichteten Glaskörnern in den Werkstein eingebettet waren desto geringer wurden die mechanischen Festigkeiten der Prüfkörper.

Zu einem ähnlichen Resultat führten Versuche mit dem in DE 101 15 159 A1 bzw. WO 02/076900 A3 beschriebenen oberflächenbeschichteten Glasgranulat. Derartig beschichtetes Glasgranulat ist heute unter dem Namen "Fabrino Color Coats®" auf dem Markt, so dass mineralisch gebundene Probekörper (mit einem Glasanteil von 50 % des Gesamtzuschlags) angefertigt werden konnten. Hierbei zeigte sich, dass die eingebetteten oberflächenbeschichteten Glaskörner nicht in erforderlichem Maße mit der umgebenden Zementmatrix verhaftet waren (*vgl. Anforderungsprofil, Punkt* (*c)*), so dass die Ergebnisse bei der Prüfung der mechanischen Festigkeiten, insbesondere der Biegezugfestigkeit, nicht zufrieden stellend ausfielen.

Ferner wurde festgestellt, dass die vergleichsweise dicke Beschichtung der Glaskörner zu unschönen Farbkränzen um die aufgeschliffenen Glaskörner führte (*vgl. Anforderungsprofil, Punkt (d)*)*.*

### Anforderungsprofil

Die hier offenbarte Erfindung hat sich zum Ziel gesetzt, eine Beschichtungsstruktur zu schaffen, die das folgende Anforderungsprofil erfüllt:
*(a) Verhinderung der Alkali-Kieselsäure-Reaktion (AKR)*
   Praktisch alle Glasqualitäten, die der Markt für Recycling-Glas bietet, sind empfindlich gegenüber alkalischen Einflüssen.
   Andererseits entwickelt Beton, der mit gebräuchlichen Zementsorten (z.B Portland-Zement) angemacht wird, in Verbindung mit Feuchtigkeit eine beträchtliche alkalische Wirkung. Füllt man eine zementöse Matrix mit Recycling-Glasgranulat, so entwickelt sich bei jeder Durchfeuchtung dieser Matrix eine progressive Alkali-Kieselsäure-Reaktion: Die Oberflächen der Glaskörner werden vom Zement angegriffen bzw. angelöst. Es kommt zu weissen Ausblühungen von Alkalikarbonaten + Kieselsäure und letztlich zu einer progressiven Schädigung des Verbundes zwischen den eingebetteten Glaskörnern und dem sie umgebenden Betonwerkstein.
   In letzter Konsequenz handelt es sich also um einen "selbstzerstörenden Beton".
   Die erst seit ca. 10 Jahren hinreichend erforschte Gefahr der Alkali-Kieselsäure-Reaktion kann durch Verwendung von alkaliresistenten Glasqualitäten, ggf. auch durch Verwendung von niedrig-alkalischen Zementsorten ausgeschlossen oder zumindest reduziert werden. Alkaliresistente Glassorten sind jedoch teuer und auf dem Markt für Recyclingglas praktisch nicht verfügbar. Es liegt daher nahe, normales, alkali-empfindliches Glas mit einer - in beliebigen Farbtönen gestaltbaren - Schutzbeschichtung zu versehen, die eine ausreichende "Alkali-Sperre" bilden soll.
*(b) Dauerhafter Verbund mit dem Glaskorn*
   Von der Beschichtung wird eine dauerhafte chemische Anbindung an die Oberfläche der Glaskörner verlangt. Hierbei ist vor allem zu berücksichtigen, dass nach der Einbringung der beschichteten Glaskörner in eine zementös/hydraulisch abbindende Matrix die an der Oberfläche des Betonproduktes befindlichen Glaskörner zu einem terrazzo-artigen Schliffbild aufgeschliffen werden, und ihre umhüllende Beschichtung dadurch partiell freigelegt und nutzungs- oder witterungsbedingten Einflüssen ausgesetzt ist. Der dauerhaft adhäsive Verbund zwischen Glaskorn und Beschichtung darf insbesondere durch Wasser-, Chemikalien-oder Temperaturwechselbelastung nicht in einem Maße angreifbar sein, dass es zu einer plötzlichen oder allmählichen Ablösung (Delamination) der Beschichtung vom Glaskorn kommt.
*(c) Dauerhafter Verbund mit der zementös*/*hydraulisch gebundenen Matrix*
   Die Beschichtung der Glaskörner muss dergestalt konditioniert sein, dass sie nach der bestimmungsgemäßen späteren Einbettung in eine zementös/hydraulisch abbindende Matrix einer auf chemischer Affinität beruhenden Adhäsion gegenüber dieser Matrix bzw eine Kohäsion mit derselben eingeht. Andernfalls wären die beschichteten Glaskörner nur bindungslos in der Matrix eingeschlossen. Je mehr derartige Glaskörner im Betonprodukt enthalten sind, desto geringer würden dessen mechanische Festigkeiten, insbesondere die Zugfestigkeit. Zudem bestünde die Gefahr, dass einzelne Glaskörner bereits beim Schleifen des Betonproduktes herausgelöst werden.
(*d*) *Möglichst dünnschichtiger Aufbau*
   Ein weiteres wichtiges Erfindungsziel war es, die im Anforderungsprofil aufgeführten Punkte *(a), (b)* und *(c)* bei möglichst dünner Auslegung der Glaskornbeschichtung zu erreichen - dies nicht nur aus materialökonomischen sondern auch aus optisch-ästhetischen Gründen: Denn nach dem Beschleifen der unter Einbindung von beschichteten Glaskörnern hergestellten Terrazzo- oder Betonwerkstein-Oberflächen wird die Beschichtung in Form eines "Farbkranzes" um jedes aufgeschliffene Glaskorn sichtbar. Je nach Form und Lage des Glaskorns kommt dieser Farbkranz unterschiedlich stark zur Geltung. Trifft zum Beispiel eine plane oder nur minimal gewölbte Oberfläche eines mit 200 µm Schichtdicke beschichteten Glaskorns in einem Winkel von 90° auf die beschliffene Oberfläche des Werksteins, so ist der Farbkranz ca. 200 µm dick. Trifft sie jedoch in einem sehr spitzen Winkel von nur wenigen Grad auf die beschliffene Oberfläche des Werksteins, so ist der Farb-kranz um ein mehrfaches dicker - und das wirkt sich optisch nachteilhaft auf die ansonsten edel und brillant wirkende Glasterrazzo-Oberfläche aus.
   Je dünner die Glaskorn-Beschichtung gestaltet ist - und je früher sie in den Farbton der umgebenden Matrix übergeht, desto weniger wird der Farbkranz als störend empfunden.

### Die erfindungsgemäße Lösung:

Ziel der hier vorgelegten Erfindung war es, eine - in jedem gewünschten Farbton gestaltbare - Beschichtung für herkömmliches Recycling-Glasgranulat zu entwickeln, die alle Punkte des *Anforderungsprofils* gleichermaßen erfüllt. Es wurde gefunden, dass eine derartige Beschichtung erzielt wird, wenn sie wie folgt aufgebaut ist:
(1) Als Beschichtungsbindemittel dient ein ursprünglich wasserbasiertes, in beliebigem Farbton pigmentierbares Reaktionsharz, vorzugsweise ein Bisphenol A-Epoxidharz in reaktiver Verbindung mit einem Polyamin/Polyglycol-Addukt. Dieses Harz ist mit einem - ursprünglich wässrigen - organofunktionellen Siloxanoligomer angereichert, vorzugsweise einem diamino-funktionellen oligomeren Siloxan. Diese Siloxan-Dotierung bewirkt eine dauerhafte chemische Anbindung des Beschichtungsharzes an die Oberfläche der Glaskörner (*vgl. Anforderungsprofil, Punkt (b)).*
   Eine wichtige Eigenschaft des wasserbasierten und silanisierten Epoxid-Bindemittelsystems wurde darin erkannt, dass dieses bis zu 30 % mit Wasser verdünnt werden kann. Die durch die Wasserverdünnung bewirkte Senkung der Viskosität ermöglicht eine hohe Aufnahmefähigkeit von Farbpigmenten, sodass auch intensiv gefärbte Beschichtungen bei geringer Schichtdicke erzielt werden können.
   Ein weiterer Vorteil der Verwendung von wasserbasierten Beschichtungsmitteln liegt darin, dass bei der Beschichtung eingesetzte Werkzeuge und Behälter mit Wasser, d.h. ohne Einsatz von Lösemitteln gereinigt werden können.
(2) Die erfindungsgemäße Beschichtung enthält eine "Panzerung" aus sehr hellem, transparentem Muskovit-Glimmer im Größenspektrum zwischen 10 µm und 1000 µm oder einem Teilbereich hieraus. Diese Panzerung bildet eine wirksame Sperre gegen den alkalischen Einfluss der später das Glaskorn umgebenden Zementmatrix. Mit meist nur 5 bis 20 µm sind die Glimmerschuppen sehr dünn. Als inerter Stoff sind sie unempfindlich gegen alkalische Einflüsse. Zudem sind sie flexibel und passen sich im Zuge des Beschichtungsvorgangs in flach liegender Position der Oberflächenform des Glaskorns an. Die "Panzerung" mit sehr dünnen, einander überlagernden Glimmerschuppen bewirkt auf Grund dieser Eigenschaften einen viel wirksameren Alkali-Schutz des Glaskorns als dies mit einem "ungepanzerten" alkaliresistenten Kunstharz alleine möglich wäre. Die Glimmer-Panzerung erlaubt somit, die Schichtdicke der Epoxidgebundenen Umhüllung des Glaskorns zu reduzieren. *(vgl. Anforderungsprofil, Punkte (a) und (d))*
(3) Überraschend wurde gefunden, dass die geforderte Adhäsionsfähigkeit der beschichteten Glaskörner gegenüber der sie später umgebenden zementös/hydraulisch gebundenen Matrix (*vgl. Anforderungsprofil, Punkt (c)*) erreicht wird, wenn die Außenoberfläche jedes beschichteten Glaskorns mit einer aus Zement und mineralischem Mehl gebildeten Haftbrücke umhüllt ist, z. B. mit einem Gemisch aus weissem oder grauem, ggf. mit geeignetem Pigment farblich abgetöntem Portland Zement und einer Quarzmehlkörnung im Größenbereich von 100 - 500 µm oder einem Teilbereich hieraus.
   Die Bindung dieses Zement-Mineralmehl-Gemisches an die Beschichtungsmatrix des Glaskorns erfolgt teils kohäsiv (über das Kunstharz und das darin enthaltene Siloxanoligomer), teils hydraulisch reaktiv (über das im Kunstharz zum Zeitpunkt der Applizierung der pulverförmigen Haftbrücke noch enthaltene Wasser).
   Die beschriebene Haftbrücken-Umhüllung schafft somit einen "fliessenden Übergang" von organisch-polymerer zu anorganischhydraulischer Bindungsphase.
   Die gröberen Partikel der in der Haftbrücke enthaltenen Mineralmehlkörnung bewirken zudem eine vorteilhafte mechanische Verzahnung mit dem später die Glaskörner umgebenden Zementmörtel.
   Ein äusseres Merkmal der erfindungsgemäßen Beschichtung ist, dass die Beschichtung innenseitig (d.h. auf der dem Glaskorn zugekehrten Oberfläche) einen völlig anderen Farbton aufweisen kann als außenseitig (d.h. auf der der Werksteinmatrix zugekehrten Oberfläche). Der Farbton der Innenoberfläche ist dabei durch das dem Beschichtungsmittel zugegebene Farbpigment definiert, der Farbton der Außenoberfläche dagegen durch die Farbe des die Haftbrücke bildenden Zementpulvers (z.B. Portland-Grauzement oder Weißzement oder ein heller Silikatzement) und Mineralmehls (z.B. weisses Marmormehl oder schwarzes Basaltmehl oder vermahlener Hüttensand) sowie ggf. eines der Haftbrücke zugegebenen anorganischen, alkalibeständigen Farbpigments.
   Vorteilhaft ist es, die Farbgebung der mineralischen Haftbrücke dem Farbton der später die Glaskörner umgebenden Betonmatrix anzupassen. Dadurch wird erreicht, dass der nach dem Beschleifen der Oberfläche der unter Einbindung von erfindungsgemäß beschichteten Glaskörnern hergestellten Terrazzo- oder Betonwerkstein-Produkte sichtbar werdende "Farbkranz" um jedes an der Produkt-Oberfläche aufgeschliffene, erfindungsgemäß beschichtete Glaskorn optisch "verschlankt" wird und somit - bei Betrachtung aus naher Distanz - nicht mehr störend ins Auge fällt.
   Aus Gründen der physikalischen und chemischen Kompatibilität sollte die die anorganische äussere Haftbrücke bildende Umhüllung der beschichteten Glaskörner denselben Zementtyp enthalten, mit dem das spätere Endprodukt gefertigt wird. Das heißt, wenn das Endprodukt z. B. mit Portland-Zement gebunden werden soll, sollte für die Haftbrücke auch Portland-Zement verwendet werden. Wenn das Endprodukt hingegen z.B. mit einem zementartigen Bindemittel auf Silikatbasis gebunden werden soll, sollte auch in der Haftbrücke dieser Silikatzement verwendet werden. Auch Mischungen von klassischem Zement und fortschrittlichen Silikatbindemitteln bzw. sog. Geopolymeren sind hierbei eine Option.

Die unter (1), (2) und (3) aufgeführten Einzelmerkmale bilden in ihrem Zusammenwirken das erfindungsrelevante Charakteristikum der hier offenbarten Beschichtung von Glasgranulat.

### Herstellungsverfahren:

Zum besseren Verständnis der vorgelegten Erfindung seien die wesentlichen Verfahrensschritte der Beschichtung kurz beschrieben. Diese sind in aller Regel dreistufig:
Im ersten Schritt wird das "nackte" Glasgranulat mit wasserbasiertem und somit auch wasserverdünnbarem Epoxidharz beschichtet, welches im gewünschten Farbton pigmentiert und mit organofunktionellem Siloxanoligomer angereichert ist.

Das Beschichtungsharz ist vorzugsweise bereits zu ca. 25 Gew.% mit Glimmerschuppen im relativ kleinen Grössenbereich 10 - 120 µm gefüllt. Bei diesen Glimmerschuppen kann es sich um unbeschichteten, sehr hellen bzw. transparenten Muskovit-Glimmer oder auch um mit Titandioxid und/oder anderen Stoffen beschichteten Effekt-Glimmer (z.B. Merck Iriodin^{®} Perlglanzpigmente) handeln. Die Verwendung von derartigem Effekt-Glimmer bewirkt einen optisch irisierenden, an das Schillern von Perlmutt erinnernden Effekt, wie man ihn z.B. von Autolacken her kennt.

Zum Abschluss des ersten Beschichtungsschrittes, in einem Stadium, in dem das ursprünglich im Beschichtungsharz enthaltene Wasser bereits dehydriert, das Harz aber noch immer zähflüssig ist, wird das Glasgranulat mit sehr dünnen aber relativ grossen (100 - 1000 µm, vorzugsweise im Bereich 100 - 400 µm) Muskovit-Glimmerschuppen Oberflächen deckend beschichtet. Das Ergebnis sind weitgehend klebefreie Oberflächen der Glaskörner.

Nach hinreichender Härtung der ersten Schicht wird im zweiten Beschichtungsschritt der erste Schritt praktisch wiederholt.

Eine Dotierung des Beschichtungsharzes mit Effekt-Glimmer ist jetzt jedoch nicht mehr erforderlich - es genügt eine Dotierung mit Epoxid-geeignetem Farbpigment ggf. unter Zugabe von unbeschichtetem Muskovit-Glimmer im Grössenbereich 10 - 120 µm.

Zum Abschluss des zweiten Beschichtungsschrittes werden die Glaskörner erneut mit relativ grossen Muskovit-Glimmerschuppen (100 - 1000 µm, vorzugsweise im Bereich 100 - 400 µm) oberflächendeckend adhäsiv belegt. Das Ergebnis ist eine Verstärkung der aus einander überlagernden Glimmerschuppen gebildeten Sperrschicht gegen alkalische Einwirkung.

Im dritten Beschichtungsschritt wird zunächst ähnlich verfahren wie im zweiten Schritt:
Das silanisierte Beschichtungsharz wird lediglich mit Epoxid-geeignetem Farbpigment, ggf. unter Zugabe von unbeschichtetem Muskovit-Glimmer, im Grössenbereich 10 - 120 µm versetzt.

Zum Abschluss des dritten Beschichtungsschrittes werden die Glaskörner jedoch nicht mehr mit Muskovit-Glimmerschuppen sondern mit einem Gemisch aus Zementpulver und mineralischem Mehl bzw. Feinkorn (Körnung 100 bis 500 µm) umhüllt. Um einen "fliessenden Übergang" von der polymeren Bindung zur mineralisch-hydraulischen Bindung zu erreichen, ist es vorteilhaft, wenn das wässrige Beschichtungsharz zum Zeitpunkt des Aufbringens des Zement-Mineralmehl-Gemisches noch nicht dehydriert ist.

### Beispiele

### 1. Erprobte Komponenten:

Gemäß dem oben beschriebenen Herstellungsverfahren wurden folgende Materialkomponenten bislang erfolgreich zur erfindungsgemäßen Beschichtung eingesetzt:

| | |
|---|---|
| Recycling-Glas: | - Silikatglas (vorzugsweise farbloses Floatglas) |
| | - Kalk-Natron-Glas (Behälterglas, farblos oder farbig) |
| | - Bleiglas |
| | - Borosilikätglas |
| | - Spiegelglas |
| Glaskörnungen: | 1-3 mm / 2 - 5 mm / 5- 12 mm /10 - 20 mm |
| Bindemittel: | Wasserbasiertes und wasserverdünnbares Bisphenol A-Epoxidharz in Verbindung mit einem Polyamin/Polyglycol-Addukt |
| Verdünnung: | Sauberes Wasser |
| Silan-Additiv: | in Wasser gelöstes diamino-funktionelles oligomeres Siloxan |
| Färbungsmittel: | - Handelsübliche Epoxid-kompatible Farbpigmente mit Lichtechtheit 7 - 8, |
| | - Metallische Goldbronze-Flakes |
| | - Fluoreszierende oder phosphoreszierende Pigmente |
| Glanzbildner: | - Perlglanz-Effektpigment (Titandioxid (Rutil)- und/oder Eisenoxid-beschichtete Glimmerschuppen) im Grössenbereich 10 - 120 µm |
| "Panzerung": | - Unbeschichteter Muskovit-Glimmer 10 - 1000 µm |
| Haftbrücke: | - Zementsorten CEM I, CEM II, CEM IV in Verbindung mit Gesteinsmehl 100 - 500 µm, |
| | - Dyckerhoff Flowstone^{®} |
| | - pulverförmiges Silikatbindemittel in Verbindung mit vermahlenem Hüttensand |
| | - Zusatz von anorganischen, UV-stabilen und alkaliresistenten Farbpigmenten |

Diese Aufstellung erhebt keinen Anspruch auf Vollständigkeit und schliesst nicht aus, dass auch andere, hier nicht aufgeführte Materialkomponenten im Sinne des erfinderischen Hauptanspruchs eingesetzt werden können.

### 2. Beispiel für Massenanteile der Beschichtungszusammensetzung

Für die erfindungsgemässe Beschichtung von 100 Massenteilen Glasgranulat im Korngrössenbereich 5 - 10 mm sind nach bisherigen Erprobungen erforderlich:

| | |
|---|---|
| 3,0 - 5,0 | Massenteile Epoxid* |
| 0,1 - 0,17 | Massenteile Silan/Siloxan* |
| 0,6 - 1,0 | Massenteile Farbpigment, einschliesslich effektbeschichteter oder unbeschichteter Glimmer 10 - 120 µm |
| 1,0 - 1,8 | Massenteile Muskovit-Glimmerschuppen 100 - 800 µm |
| 1,2 - 2,0 | Massenteile Zementpulver |
| 1,0 - 1,8 | Massenteile Gesteinsmehl |
| 0,0 - 0,1 | Massenteile zementgeeignetes Pigment |

| | |
|---|---|
| * Die Angaben zu den ursprünglich wässrigen Substanzen beziehen sich auf den Aggregatzustand nach der Dehydrierung und Aushärtung. | |

### Verwendung

Das erfindungsgemäß beschichtete Glasgranulat ist ausschließlich als Zuschlagstoff zur Herstellung von beschliffenem bzw. poliertem Ortterrazzo oder zur Herstellung von beschliffenen und polierten oder beschliffenen und mechanisch oberflächenstrukturierten - z.B. kugelgestrahlten - Platten oder sonstigen Formteilen aus Betonwerkstein bestimmt.

## Patentansprüche

1. Beschichtetes Glasgranulat, **dadurch gekennzeichnet, dass** die Beschichtung aus einem - ursprünglich wasserbasierten und gewünschtenfalls farbpigmentierten - Reaktionsharz gebildet ist, welches mit einem - ursprünglich wässrigen - organofunktionellen Siloxanoligomer angereichert ist, eine Panzerung aus sehr dünnen, einander überlagernden Glimmerschuppen enthält und über die gesamte Aussenoberfläche mit einer aus Zement und mineralischem Mehl gebildeten Haftbrücke umhüllt ist.

2. Beschichtetes Glasgranulat gemäß Anspruch 1, **dadurch gekennzeichnet, dass** das Glasgranulat aus farblos-transparentem und/oder farbigem Recyclingglas und/oder Spiegel-Recyclingglas besteht und in Korngrößen zwischen 1 mm und 20 mm oder einem Teilbereich hiervon vorliegt.

3. Beschichtetes Glasgranulat gemäß Anspruch 1 oder 2, **dadurch gekennzeichnet, dass** das die Beschichtungsmatrix bildende Reaktionsharz ein - ursprünglich wässriges - Bisphenol A-Epoxidharz in reaktiver Verbindung mit einem Polyamin/Polyglycol-Addukt ist.

4. Beschichtetes Glasgranulat gemäß einem der Ansprüche 1 - 3, **dadurch gekennzeichnet, dass** das in die Beschichtungsmatrix eingebundene organofunktionelle Siloxanoligomer ein diamino-funktionelles oligomeres Siloxan ist.

5. Beschichtetes Glasgranulat gemäß einem der Ansprüche 1 - 4, **dadurch gekennzeichnet, dass** die Beschichtungsmatrix pigmentiert ist oder mit - vorzugsweise anorganischem - oder metallischem oder fluoreszierendem oder phosphoreszierendem Pigment angereichert ist.

6. Beschichtetes Glasgranulat gemäß einem der Ansprüche 1 - 5, **dadurch gekennzeichnet, dass** die Panzerung aus sehr dünnen, einander überlagernden Glimmerschuppen aus unbeschichtetem oder irisierend effektbeschichtetem Glimmer, vorzugsweise sehr hellem Muskovit-Glimmer im Größenbereich zwischen 10 µm und 1000 µm oder einem Teilbereich hieraus besteht.

7. Beschichtetes Glasgranulat gemäß einem der Ansprüche 1 - 6, **dadurch gekennzeichnet, dass** die eine Haftbrücke bildende Beschichtung der Aussenoberfläche aus demselben Zementtyp gebildet ist, mit dem das spätere Endprodukt gefertigt wird - vorzugsweise ein pigmentierter oder unpigmentierter, ursprünglich grauer oder weisser Portland-Zement - und dass diese zementöse Haftbrücke zu etwa gleichem Anteil mit mineralischem Mehl - vorzugsweise einer Quarzmehlkörnung im Bereich 100 - 500 µm oder einem Teilbereich hieraus - versetzt ist.

8. Verwendung von beschichtetem Glasgranulat gemäß den Ansprüchen 1 - 7 als Zuschlagstoff zur Herstellung von beschliffenem bzw. poliertem Ortterrazzo oder zur Herstellung von beschliffenen und polierten oder beschliffenen und mechanisch oberflächenstrukturierten - z.B. kugelgestrahlten - Platten oder sonstigen Formteilen aus Betonwerkstein.

## Claims

1. Coated glass granulate, **characterised in that** the coating consists of an originally water-based and, if desired, colour-pigmented reaction resin which is enriched with an originally aqueous, organofunctional silloxane oligomer, contains armour made out of very thin overlapping mica scales and the entire outer surface of which is covered with a bonding agent made out of cement and mineral powder.

2. Coated glass granulate according to claim 1, **characterised in that** the glass granulate consists of colourless-transparent and/or coloured recycled glass and/or recycled mirror glass and is present in grain sizes between 1 mm and 20 mm or a range thereof.

3. Coated glass granulate according to claim 1 or 2, **characterised in that** the reaction resin forming the coating matrix is an originally aqueous bisphenol A epoxy resin in reactive bonding with a polyamine/polyglycol adduct.

4. Coated glass granulate according to any of claims 1-3, **characterised in that** the organofunctional siloxane oligomer bonded in the coating matrix is a diamino-functional oligomeric siloxane.

5. Coated glass granulate according to any of claims 1-4, **characterised in that** the coating matrix is pigmented or enriched with preferably anorganic, or metallic or fluorescent or phosphorescent pigment

6. Coated glass granulate according to any of claims 1-5, **characterised in that** the armour consists of very thin, overlapping mica scales made out of uncoated or layered mica that creates an iridescent effect, preferably very bright muscovite mica in grain sizes between 10 µm and 1000 µm or a range thereof.

7. Coated glass granulate according to any of claims 1-6, **characterised in that** the outer surface of a coating that forms a bonding agent is formed out of the same type of cement as the subsequent end product is produced with, preferably a pigmented or unpigmented, originally grey or white Portland cement, and that this cementitious bonding agent is blended, in equal shares, with mineral powder, preferably quartz powder with graining in the range of 100-500 µm or a range thereof.

8. Use of coated glass granulate according to claims 1-7 as an aggregate for manufacturing ground and/or polished Terrazzo flooring or for manufacturing ground and polished or ground and mechanically surface-structured, e.g. shot-peened, slabs or other moulded parts of artificial stone.

## Revendications

1. Granulé de verre enrobé, **caractérisé en ce que** le revêtement est composé d'une résine de réaction initialement à base d'eau et, si désiré, à pigmentation colorée, enrichie d'un oligomère siloxane organo-fonctionnel, initialement aqueux, comprenant une couche renforcée d'écailles de mica très fines et empilées les unes sur les autres, et recouvert sur l'ensemble de sa surface extérieure d'un pont d'adhérence composé de ciment et de farine minéralisée.

2. Granulé de verre enrobé selon la revendication 1, **caractérisé en ce que** le granulé de verre est composé de verre recyclé incolore-transparent et/ou de verre recyclé coloré et/ou de verre de miroir recyclé, et se présente en grains de 1 mm à 20 mm de taille ou qu'une partie d'entre eux corresponde à cette taille.

3. Granulé de verre enrobé selon la revendication 1 ou 2, **caractérisé en ce que** la résine de réaction formant la matrice de revêtement est une résine époxy de type bisphénol A, initialement aqueuse, en combinaison réactive avec un adduit de polyamine/polyglycol.

4. Granulé de verre enrobé selon l'une des revendications 1 à 3, **caractérisé en ce que** l'oligomère siloxane organo-fonctionnel intégré dans la matrice de revêtement est un oligomère siloxane diamino-fonctionnel.

5. Granulé de verre enrobé selon l'une des revendications 1 à 4, **caractérisé en ce que** la matrice de revêtement est pigmentée ou enrichie d'un pigment, de préférence anorganique, ou métallique ou fluorescent ou phosphorescent.

6. Granulé de verre enrobé selon l'une des revendications 1 à 5, **caractérisé en ce que** la couche renforcée est composée d'écailles de mica très fines et déposées les unes sur les autres en mica non enrobé ou irisé pour un revêtement à effet, de préférence des écailles de mica muscovite très clair d'une taille comprise entre 10 µm et 1000 µm ou qu'une partie d'entre-elles corresponde à cette taille

7. Granulé de verre enrobé selon l'une des revendications 1 à 6, **caractérisé en ce que** le revêtement de la surface extérieure formant un pont d'adhérence est composé du même type de ciment que celui dont est composé le produit final, de préférence un ciment Portland pigmenté ou non pigmenté, initialement gris ou blanc, et que ce pont d'adhérence en ciment est mélangé dans une proportion identique avec une farine minérale, de préférence des grains de quartz d'une taille de 100 à 500 µm ou qu'une partie d'entre eux corresponde à cette taille.

8. Utilisation de granulé de verre enrobé conformément aux revendications 1 à 7 comme additif pour la fabrication de terrazzo meulé et/ou poli ou pour la fabrication de plaques ou autres éléments en béton meulés et polis ou meulés et à surface mécaniquement structurée (par ex. grenaillée).
